# FASCICULE DE BREVET EUROPEEN

(11) **EP 2 117 880 B1**
(45) Date de publication et mention de la délivrance du brevet: **02.05.2012**
(21) Numéro de dépôt: 07858664.1
(22) Date de dépôt: 06.11.2007
(51) Int. Cl.: B60R 16/06

(54) **ACTIONNEUR PERMETTANT L'ECOULEMENT DE CHARGES ELECTROSTATIQUES DANS UN VEHICULE AUTOMOBILE**
REGLER FÜR DEN FLUSS ELEKTROSTATISCHER LADUNGEN IN EINEM FAHRZEUG
ACTUATOR FOR THE FLOW OF ELECTROSTATIC CHARGES IN AN AUTOMOBILE VEHICLE

(30) Priorité: 06.11.2006 FR 0654739
(43) Date de publication de la demande: 18.11.2009
(73) Titulaire: Renault S.A.S., 92100 Boulogne-Billancourt (FR)
(72) Inventeur: MEGARD, Benoit, 92320 Chatillon (FR); NGUYEN, Hoang-Giang, 91130 Ris Orangis (FR); PIRICI, Diana, 78180 Montigny Le Bretonneux (FR); SERRE, Eric, 78610 Le Perray En Yvelines (FR)
(86) Numéro de dépôt international: PCT/FR2007/052302
(87) Numéro de publication internationale: WO 2008/056081

(56) Documents cités:
- DE-A1- 10 233 650
- DE-A1- 19 707 769
- DE-C1- 3 343 061
- JP-A- 2005 138 734

## Description

### DOMAINE TECHNIQUE

La présente invention concerne un actionneur pour mouvoir un composant mobile de véhicule, tel qu'un ouvrant de toit, ce composant mobile étant susceptible d'accumuler des charges électrostatiques néfastes pour la carte électronique de commande de cet actionneur.

La présente invention se rapporte donc au domaine automobile et porte plus spécifiquement sur les composants d'un véhicule automobile ou d'un véhicule utilitaire.

### ETAT ANTERIEUR DE LA TECHNIQUE

De manière connue, certains véhicules possèdent des composants mobiles susceptibles d'accumuler des charges électrostatiques lorsqu'ils sont soumis à un champ électrique intense. C'est le cas par exemple des véhicules équipés de toits ouvrants à moteur électrique, de toits en verre fixe équipés d'un rideau à moteur électrique. C'est encore le cas des cabriolets équipés de toits en verre repliables.

Auparavant en effet, de tels toits en verre étaient collés et vissés sur la carrosserie métallique du véhicule. Toutefois, les problèmes de corrosion induits par la présence des vis ont conduit les constructeurs automobiles à assembler ces toits en verre sur la carrosserie uniquement au moyen de colles. Cependant, les colles employées sont, pour la plupart, isolantes. Or, de manière connue, le potentiel électrique d'un composant ainsi isolé peut s'élever du fait de l'accumulation de charges électrostatiques lors de certaines opérations de montage ou simplement lors du roulage du véhicule.

Ainsi par exemple, pour effectuer les opérations de paraffinage, la partie vitrée d'un toit ouvrant peut acquérir des charges si la paraffine est pulvérisée sur le toit. En effet, les buses de pulvérisation électrostatique de paraffine fonctionnent à une haute tension continue de 60 kV environ. Ceci permet de charger, sous l'effet du champ électrostatique généré localement, les gouttes de paraffine traversant la buse. Cette technique de pulvérisation électrostatique permet de réaliser des dépôts d'épaisseur uniforme, tout en minimisant les pertes de paraffine. Si les charges atteignant la carrosserie se neutralisent instantanément, ce n'est pas le cas des charges parvenant sur le toit en verre.

Or, les charges accumulées sur un panneau en verre peuvent induire, par couplage capacitif, une élévation du potentiel des pièces métalliques proches et flottantes, c'est-à-dire non reliées à la masse. C'est le cas des composants du mécanisme supportant et déplaçant le panneau isolant formant l'ouvrant de toit en verre. Un tel mécanisme est généralement mû par l'organe d'articulation d'un actionneur électromécanique. Cet organe d'articulation, constitué de pignons ou autres crémaillères, est donc lui aussi porté à un potentiel électrique élevé. Selon leur structure et leur assemblage, certains composants peuvent ainsi voir leur potentiel s'élever à 4 ou 5 kV.

Or, un tel actionneur électromécanique incorpore généralement un moteur électrique et une carte électronique destinée à le piloter. De manière connue, une telle carte électronique comprend plusieurs composants électroniques reliés en un circuit ainsi qu'une masse constituant un potentiel de référence pour ses composants électroniques. Pour augmenter la compacité des actionneurs électromécaniques embarqués, la carte électronique de commande est généralement placée tout à côté de l'organe d'articulation principal du moteur électrique. Un tel actionneur est decrit dans ce document JP 2005 138734A selon le préambule de la revendication 1.

Toutefois, cette grande proximité entre un tel organe d'articulation et la masse de cette carte électronique conduit assez fréquemment à une décharge électrostatique du composant isolé par l'intermédiaire d'un arc électrique parcourant cette carte électronique. Or, il arrive qu'une telle décharge électrostatique détruise des composants de cette carte électronique, tel que des transistors ou des relais. A la suite de la destruction de ces composants, l'actionneur électromécanique devient inutilisable à cause de la défaillance de sa carte électronique de commande. Or, le remplacement des moteurs électriques défectueux obère le coût de matériel et de main d'oeuvre nécessaire à l'installation d'un composant mobile sur un véhicule.

Pour remédier à ce problème, une première solution consiste à relier certains des composants chargés directement à la masse du véhicule électrique du moteur actionnant le composant mobile à la masse mécanique de la caisse au moyen d'un câble électriquement conducteur. Si une telle solution permet effectivement de protéger les moteurs électriques ou actionneurs électromécaniques contre les décharges électrostatiques, un tel câblage représente également un surcoût de matériel et de main d'oeuvre pour chaque véhicule.

Alternativement à cette première solution, il a été envisagé d'assembler les composants isolants sur la carrosserie du véhicule au moyen d'une colle rendue conductrice par l'inclusion de particules de charbon ou de billes métalliques. La colle permet de faire la liaison électrique entre la structure métallique du toit et la carrosserie, empêchant ainsi la structure métallique de monter en potentiel, même lorsqu'il y a des charges électriques sur le verre.

Si la colle « conductrice » permet effectivement de guider les charges électrostatiques vers la masse sans endommager les composants électroniques de la carte de commande du ou des moteurs électriques, elle présente l'inconvénient majeur de modifier les impédances équivalentes des antennes de réception des signaux radios, téléphoniques ou multimédias (télévision numérique terrestre par exemple). De plus, l'utilisation d'une telle colle conductrice obère également le coût matériel nécessaire à l'assemblage du composant isolant tel qu'un panneau de verre.

Enfin, le vieillissement de la colle peut dégrader sa conductivité, donc sa capacité à drainer les charges électrostatiques accumulées. La détérioration de la colle se produit sous l'effet de la chaleur ambiante et du fait des réticulations survenant dans la colle.

La présente invention a donc pour objet un actionneur permettant d'éviter que la carte électronique ne soit parcourue et détruite par un arc de décharge électrique provenant de l'organe d'articulation de cet actionneur et dont le coût matériel et le coût d'installation ne soit pas trop onéreux.

Dans toute la demande, les termes « conducteur » et « isolant » doivent être lus comme des caractéristiques électriques.

### EXPOSE DE L'INVENTION

L'objet de l'invention concerne donc un actionneur déplaçant un composant mobile de véhicule et apte à collecter et à drainer les charges électrostatiques accumulées sur ce composant mobile.

Selon l'invention, l'actionneur est destiné à mouvoir un composant mobile d'un véhicule, ce composant mobile étant susceptible d'accumuler des charges électrostatiques. Cet actionneur comprenant un organe d'articulation pour mouvoir ce composant mobile, ainsi qu'une carte électronique de commande possédant une masse apte à être électriquement connectée à un potentiel nul de référence. D'après l'invention, cet actionneur comprend en outre un collecteur électriquement conducteur relié électriquement à cette masse et agencé à faible distance et en regard de cet organe d'articulation de manière à présenter une résistance électrique quasi-nulle à l'écoulement des charges électrostatiques.

En d'autres termes, l'actionneur objet de la présente invention est équipé d'un conducteur monté près d'un organe d'articulation pour réaliser un circuit électrique très faiblement résistant de manière à collecter les charges électrostatiques accumulées sur le composant mobile mû par cet actionneur. Par « composant mobile », on désigne, d'une part, les ouvrants de toit, portières ou hayons aptes à accumuler des charges électrostatiques et, d'autre part, un rideau mobile monté près d'un composant fixe accumulant des charges électrostatiques, tel qu'un toit de verre.

Par ailleurs, le terme « faible distance » désigne également les distances nulles, c'est-à-dire le cas où le collecteur est en contact physique avec l'organe d'articulation.

Par l'adjectif « quasi nul », on désigne une résistance électrique suffisamment faible pour ne pas s'opposer à l'écoulement des charges électrostatiques. Il peut ainsi s'agir d'une lame d'air de faible épaisseur située entre l'organe d'articulation et le collecteur, ces pièces n'étant alors pas en contact entre elles. Lorsque la tension est suffisamment élevée, le jeu faible qui les sépare représente une distance sur laquelle l'air n'empêche pas le passage d'un arc électrique.

En pratique, ce collecteur peut être électriquement relié à cette masse de manière indépendante du circuit de masse des composants électroniques constituant cette carte de commande.

Selon une première forme de réalisation de l'invention, l'actionneur peut être apte à mouvoir ce composant selon une rotation et le collecteur peut présenter la forme d'un anneau circulaire monté de façon coaxiale autour d'un arbre cylindrique constituant l'organe d'articulation.

La circularité de l'anneau réalise une probabilité « isotrope », c'est-à-dire égale dans toutes les directions, pour le départ d'une décharge électrostatique depuis l'arbre vers l'anneau de masse. La distribution isotrope a pour avantage selon notre invention d'optimiser la surface utile sur la carte électronique de commande.

En pratique, la carte électronique peut comporter un trou traversant apte à loger l'arbre cylindrique formant l'organe d'articulation de l'actionneur et cet anneau peut être constitué d'une piste annulaire conductrice déposée sur un substrat souple en matériau polymère, de préférence en un polyéthylène téréphtalate (P.E.T.P.) métallisé, le substrat souple comportant au moins une branche dont une extrémité est connectée à la masse, tandis que l'autre extrémité supporte cet anneau en porte-à-faux entre le composant mobile et la carte électronique.

En d'autres termes, le collecteur annulaire est monté plus près du composant chargé que ne l'est la carte électronique. Un tel agencement augmente encore la protection de la carte électronique, dans la mesure où la décharge électrostatique se produit inévitablement vers le collecteur.

Selon une forme de réalisation pratique de cette première forme de réalisation, l'anneau peut être constitué d'une piste annulaire conductrice, par exemple en cuivre, déposée sur la carte électronique et prolongée par une branche conductrice connectée à la masse de manière indépendante du circuit de masse des composants électroniques constituant ladite carte de commande.

Cette caractéristique permet de réaliser le collecteur annulaire simultanément à la fabrication de la carte électronique et donc de limiter les coûts de montage.

Selon une deuxième forme de réalisation de l'invention, l'actionneur peut être apte à mouvoir le composant selon une translation rectiligne et le collecteur peut être une plaque présentant un côté rectiligne et parallèle à une barre constituant l'organe d'articulation, cette plaque étant relié électriquement à la masse par l'intermédiaire d'une piste conductrice déposée sur la carte électronique.

Selon une troisième forme de réalisation de l'invention, l'actionneur peut être apte à mouvoir le composant selon un mouvement curviligne et le collecteur peut présenter une forme courbe correspondante et parallèle à l'organe d'articulation, ce collecteur étant relié électriquement à la masse par l'intermédiaire d'une piste conductrice déposée sur la carte électronique.

De tels collecteurs réalisent ainsi un chemin de décharge électrostatique apte à protéger la carte électronique.

De manière pratique, la distance entre le collecteur et cet organe d'articulation est comprise entre 0,01 mm et 0,5 mm.

Cette distance représente donc l'épaisseur de la lame d'air que doit parcourir l'arc de décharge électrostatique. En pratique, cette distance est déterminée lors de la conception en fonction de l'énergie électrostatique qu'il faut évacuer. Ainsi, lors d'une pulvérisation électrostatique de paraffine sous une tension continue de 60 kV et en l'absence du collecteur caractéristique de l'invention, le potentiel d'un ouvrant de toit en verre peut atteindre 4 kV. Dans ce cas, une distance de 0,5 mm entre le collecteur et le composant mobile chargé permet d'éviter tout arc électrique.

Selon une forme de réalisation alternative de l'invention, l'actionneur peut être apte à mouvoir le composant selon une rotation et le collecteur peut présenter la forme d'une coupelle comprimée par l'extrémité d'un arbre constituant l'organe d'articulation.

Le collecteur forme donc une sorte de ressort maintenant le contact entre l'organe d'articulation en mouvement et le collecteur de charges électrostatiques. Le contact entre le collecteur et l'organe d'articulation étant maintenu par cette force de rappel, la ou les décharge(s) électrostatique(s) du composant mobile circuleront naturellement à travers le collecteur.

En d'autres termes, l'arbre tourne pour entraîner le composant mobile tout en restant en contact électronique avec le collecteur de décharge électrostatique.

En pratique, le composant mobile peut être un ouvrant de toit, une portière ou un hayon.

En effet, de tels composants, peuvent accumuler des charges électrostatiques néfastes lorsqu'ils sont électriquement isolés de la masse de la caisse du véhicule. Par conséquent, ces composants acquièrent des potentiels élevés par rapport à celui de la caisse du véhicule.

### BREVE DESCRIPTION DES FIGURES

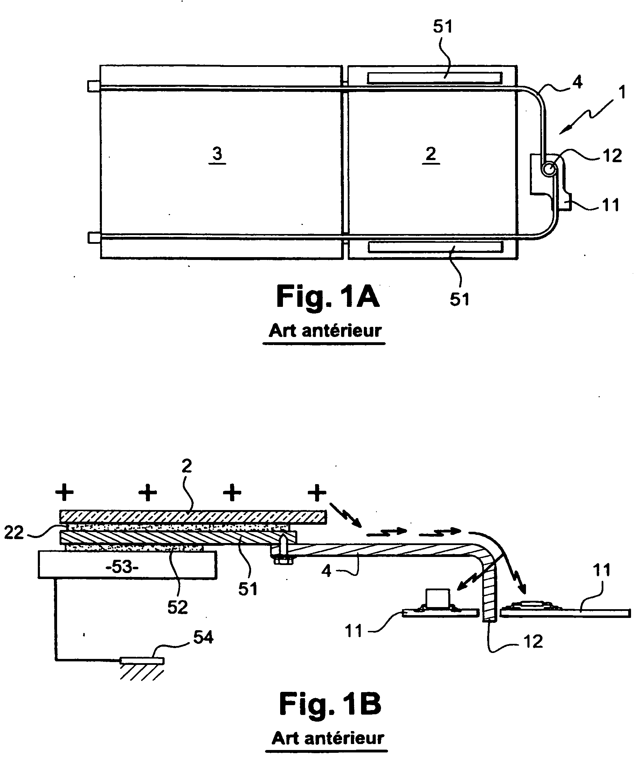

La manière dont l'invention peut être réalisée et les avantages qui en découlent ressortiront aussi des exemples de réalisation qui suivent, donnés à titre indicatif et non limitatif, à l'appui des figures annexées parmi lesquelles :
La figure la est une représentation schématique en vue de dessus d'une partie d'un toit de véhicule, dont la figure 1b est une représentation schématique détaillée en section. Ces deux figures illustrent l'art antérieur et le problème technique à résoudre par l'invention.
La figure 2A est une représentation schématique en vue de dessus d'une partie d'un actionneur conforme à une première forme de réalisation de l'invention.
La figure 2B est une représentation schématique en section de la figure 2A.
La figure 3A est une représentation schématique en vue de dessus d'une partie d'un actionneur conforme à une deuxième forme de réalisation de l'invention.
La figure 3B est une représentation schématique en section de la figure 3A.
La figure 4 est une représentation schématique en vue de dessus d'une partie d'un actionneur conforme à une troisième forme de réalisation de l'invention.
La figure 5 est une représentation schématique en vue de dessus d'une partie d'un actionneur conforme à une quatrième forme de réalisation de l'invention.
La figure 6 est une représentation schématique en vue de dessus d'une partie d'un actionneur conforme à une cinquième forme de réalisation de l'invention.
La figure 7A illustre un détail de la figure 6.
La figure 7B illustre une variante de réalisation à celle illustrée par la figure 7A.
La figure 8 illustre une variante de réalisation à celles des figures 7A et 7B.

### MODE DE REALISATION

La figure 1A illustre la partie centrale du toit d'un véhicule équipé d'un ouvrant. Elle comprend un panneau en verre fixe **2** et un panneau en verre **3** mobile par rapport à la carrosserie du véhicule. De manière connue dans l'art antérieur, le panneau mobile **3** est mû par un mécanisme **4** entraîné par un actionneur électromécanique **1**.

En pratique, le mécanisme **4** est constitué de tubes métalliques longilignes, tandis que l'actionneur **1** comprend un moteur électrique piloté par une carte électronique **11**. Le moteur électrique transmet sa puissance au mécanisme **4** par l'intermédiaire d'un organe d'articulation **12*.*** Dans la mesure où le moteur électrique représente la fonction principale de l'actionneur électromécanique **1**, on désigne parfois l'actionneur électromécanique par le terme de moteur électrique. Dans l'exemple de la figure 1A, l'organe d'articulation **12** est constitué par un pignon monté sur un arbre cylindrique entraîné en rotation par le moteur électrique. Sur la figure A, le pignon n'est pas représenté directement.

La figure 1B représente une vue en section de la figure 1A. Elle montre de façon plus détaillée la structure de cette partie centrale d'un toit de véhicule 2-3. Ainsi, la carte électronique **11** est composée, de manière connue, d'un substrat rigide sur lequel sont montés les composants électroniques du circuit de commande du moteur électrique. Comme exposé précédemment, pour augmenter la compacité de l'actionneur électromécanique **1**, le moteur électrique est monté juste à côté de la carte électronique **11** et de l'arbre du pignon d'entraînement **12** est ménagé au sein d'un orifice traversant la carte électronique **11**. Puis, le pignon ou organe d'articulation **12** met en mouvement le mécanisme métallique **4** de façon à déplacer le panneau en verre mobile **3.**

Quant au panneau de verre fixe **2**, il est assemblé par collage sur la carrosserie **53** par l'intermédiaire de rails métalliques **51**. En pratique, le panneau en verre **2** est collé sur les rails métalliques **51** au moyen d'une couche de colle **22**, tandis que les rails métalliques **51** sont collés sur la carrosserie **53** au moyen d'une couche de colle **52**. Comme exposé précédemment, la structure ainsi collée isole électriquement de la carrosserie **53** le panneau en verre **2** ainsi que les rails métalliques **51**, le mécanisme **4** étant monté sur les rails **51**.

Par conséquent, au cours de certaines opérations de montage du véhicule, les panneaux en verre **2** et **3**, électriquement isolants, peuvent accumuler les charges électrostatiques et élever ainsi leur potentiel jusqu'à plusieurs milliers de volts. Parmi les opérations de montage susceptibles de générer un tel potentiel, on peut citer le passage du véhicule dans une cabine de pulvérisation électrostatique de paraffine, mais aussi le nettoyage du toit ouvrant en verre qui génère des charges par effet triboélectrique tout comme le simple déplacement du véhicule dans l'air (roulage), le contrôle de satisfaction du client ou encore divers tests de validation du fonctionnement des calculateurs embarqués. En effet, chacune de ces opérations de montage peut amener à déposer des charges électrostatiques sur le verre et donc d'élever le potentiel du mécanisme **4** et des rails métalliques, puisque leur potentiel est flottant.

Par ailleurs, il convient de noter que le panneau mobile en verre n'est pas le seul composant susceptible d'accumuler des charges électrostatiques. Ainsi, d'autres composants peuvent voir leur potentiel s'élever, comme les panneaux en verre fixe, un toit en verre électrochrome, une portière ou un hayon de coffre, composés en matériau polymère isolant etc. Du reste, pour le toit, d'autres matériaux peuvent se substituer au verre pour former un ouvrant de toit, comme le polycarbonate. Ces matériaux de substitution, également transparents, sont électriquement isolants, donc aptes à favoriser les phénomènes de charge par influence, les charges sur les isolants induisant une répartition des charges dans les conducteurs flottants proches, d'où l'apparition d'un diviseur capacitif avec montée en potentiel du conducteur isolé.

Or, le mécanisme métallique **4** et le pignon du moteur **12** sont les pièces conductrices les plus proches du composant électriquement chargé. Par conséquent, les charges électrostatiques tendent à s'écouler au travers de ce mécanisme **4** et du pignon **12** vers la carte électronique **11**.

Or, compte tenu de la proximité de l'arbre et du pignon **12** avec la carte électronique **11**, dont le circuit électronique présente un potentiel électrique nettement inférieur à celui des composants portés à haute tension, ces derniers se déchargent à travers les composants de la carte vers un potentiel nul servant de référence à la carte électronique **11.** On a ainsi observé des décharges électrostatiques depuis les ouvrants de toits à travers les composants de la carte électronique **11**, via l'organe d'articulation de l'actionneur électromécanique. Bien évidemment ces composants électroniques ont été détruits par ces décharges, rendant ainsi inopérationnel tout l'actionneur électromécanique **1** et obligeant à son remplacement.

Dans l'exemple des figures 1A et 1B, l'actionneur électromécanique **1** sert à déplacer un ouvrant de toit en verre **3**, mais un tel actionneur électromécanique pourrait remplir une autre fonction selon le modèle de véhicule qu'il équipe. Ainsi, un moteur électrique peut être employé pour enrouler et dérouler un rideau installé à proximité d'un toit en verre. Or, comme cela est exposé en relation avec l'art antérieur, la carte électronique du moteur enroulant le rideau peut tout aussi bien être détruite par des décharges électrostatiques provenant de ce toit. L'actionneur électromécanique objet de la présente invention peut donc être employé utilement pour mouvoir divers composants mobiles, tel qu'un ouvrant de toit en verre, une portière, un hayon ou encore un rideau.

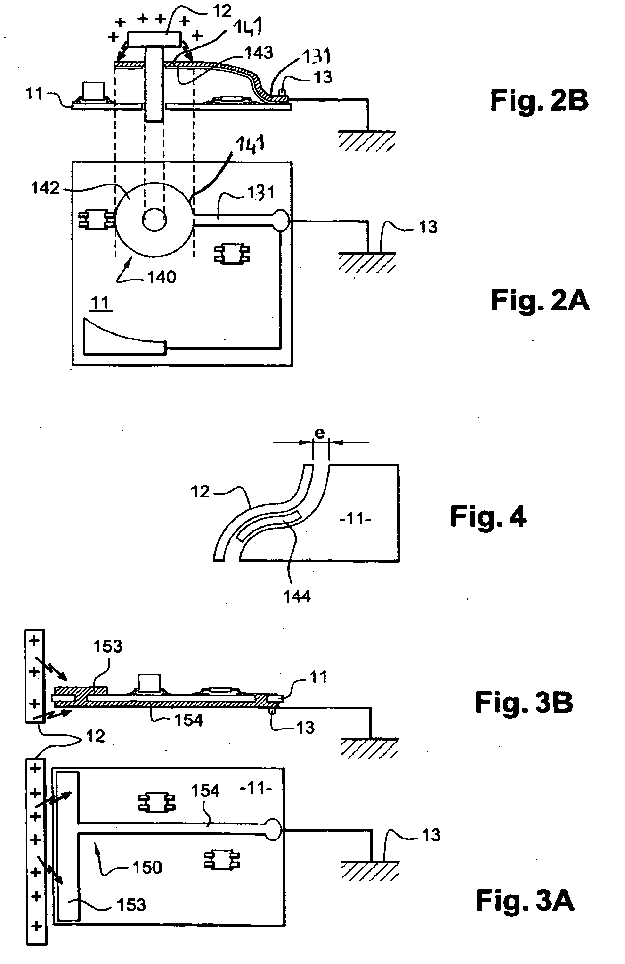

Les figures 2A et 2B représentent des vues détaillées, respectivement de dessus et en section, d'une partie d'un actionneur conforme à l'invention. Ainsi, il est prévu un collecteur annulaire **140** agencé à faible distance et autour du pignon moteur **12**. Comme on l'a vu, le pignon moteur **12** peut présenter un potentiel élevé, car il est relié aux parties métalliques flottantes susceptibles de monter à un potentiel électrique élevé.

Le collecteur **140** est lui composé d'un substrat souple **143** en polyéthylène téréphtalate (P.E.T.P.), en particulier en Mylar^{®}, sur lequel est déposée une piste annulaire **141** en un matériau électriquement conducteur, en l'occurrence du cuivre. Ainsi, comme le collecteur **140** est placé juste à côté de l'organe d'articulation formé par le pignon moteur **12**, la résistance électrique de la lame d'air les séparant est quasi nulle pour une différence de potentiel s'élevant à plusieurs milliers de volts. Par conséquent, les charges électrostatiques accumulées peuvent alors librement s'écouler vers le collecteur **140** par l'intermédiaire d'un ou plusieurs arcs électriques.

Conformément à l'invention, le substrat souple **143** formant le collecteur **140** comporte une branche **141** dont l'extrémité opposée au collecteur annulaire est connectée à la masse **13** de la carte électronique **11**, c'est-à-dire qu'elle se trouve à un potentiel nul de référence. En effet, de manière connue, la masse de la carte électronique **11** est reliée à la masse électrique **13** du véhicule à travers laquelle les charges électrostatiques s'écoulent vers la terre. La figure 2B montre le circuit de masse **131** des composants électroniques de la carte **11** ainsi que la liaison entre cette masse **131** et la masse « centrale » **13** de la carte électronique **11**.

Comme on le voit sur la figure 2B, la branche **141** du collecteur **140** est recouverte de cuivre pour conduire les charges électrostatiques. Par ailleurs, le collecteur annulaire est maintenu en porte-à-faux par la branche **141** au dessus des composants de la carte électronique **11**. Cette caractéristique permet de limiter encore les risques de décharges électrostatiques à travers la carte **11** puisqu'elle raccourcit le chemin que doivent parcourir les arcs de décharge électrostatique. Ainsi, la probabilité que cet arc électrique circule à travers la carte électronique devient complètement nulle.

Ainsi, les composants de la carte électronique **11** sont protégés contre les décharges électrostatiques transmises par le pignon moteur **12**. Le collecteur annulaire **140** présente ici la forme d'un anneau circulaire coaxial à l'arbre cylindrique supportant le pignon moteur **12**, mais il pourrait également présenter une forme en croissant ou en C, l'essentiel étant de maintenir une distance faible et une surface de correspondance ou d'échange importante avec le pignon moteur **12**, de manière à répartir équitablement sur l'anneau la probabilité de décharge.

Les figures 3A et 3B illustrent une deuxième forme de réalisation de l'invention dans laquelle l'organe d'articulation **12** de l'actionneur électromécanique objet de l'invention présente ici une forme rectiligne de manière à déplacer un composant mobile (ouvrant de toit) selon un mouvement linéaire, c'est-à-dire une translation rectiligne.

Dans cette forme de réalisation, le collecteur **150** est formé par une plaque **153** longiligne dont les deux côtés sont rectilignes et parallèles à l'organe d'articulation rectiligne **12**. Comme dans la forme de réalisation illustrée par les figures 2A et 2B, le collecteur **150** est réalisé en cuivre, c'est-à-dire en un matériau électriquement conducteur. De plus, conformément à l'invention, la plaque **153** est électriquement reliée à la masse **13** définissant un potentiel nul de référence par l'intermédiaire d'une piste en cuivre **154** déposée sur la face inférieure de la carte électronique **11**. Comme le montre la figure 3B, la plaque collectrice **153** est reliée à la branche ou piste **154** à travers un orifice ménagé dans la carte électronique **11**.

Le collecteur est ici directement réalisé sur la carte électronique **11**, cependant il pourrait également être formé sur un substrat souple (Mylar^{®}) placé en porte-à-faux à l'instar du collecteur **140** illustré par la figure 2B.

Comme on peut le voir sur la figure 3A, la plaque conductrice **153** formant le collecteur se trouve en regard de l'organe d'articulation rectiligne **12** et présente donc avec celui-ci une grande surface de correspondance permettant l'écoulement des charges électrostatiques.

La figure 4 illustre une troisième forme de collecteur pour réaliser un actionneur conforme à l'invention. En l'occurrence, l'organe d'articulation **12** de l'actionneur électromécanique présente une forme curviligne de manière à déplacer un composant mobile du véhicule selon un mouvement curviligne. Le collecteur électriquement conducteur **144** est encore placé à faible distance et en regard de l'organe d'articulation **12** de manière à présenter une faible résistance électrique à l'écoulement des charges électrostatiques accumulées sur ce composant mobile. La carte électronique **11** est quant à elle positionnée à une distance **e** suffisamment grande de l'organe d'articulation **12** pour éviter la destruction de ses composants électroniques.

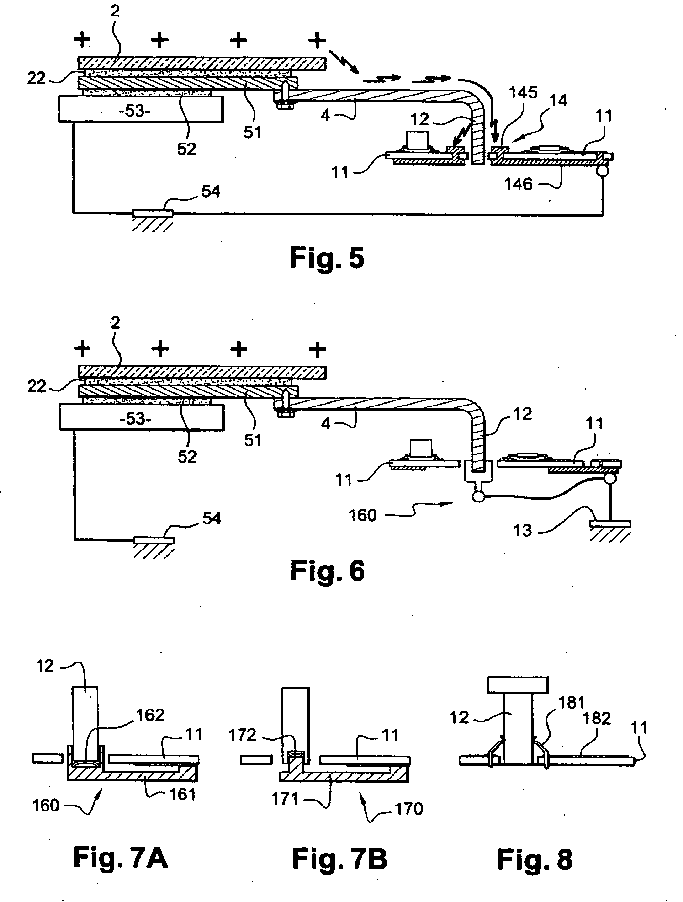

La figure 5 présente une autre variante de réalisation de l'invention où le collecteur revêt une forme hybride entre celles des figures 2B et 3A. En effet, le collecteur **14** comporte un anneau conducteur **145** déposé à même la carte électronique **11** et relié à la masse électrique **13** par l'intermédiaire d'une branche **146** réalisée en cuivre sur la face inférieure ou sur la face supérieure de la carte électronique **11**. Conformément à une caractéristique de la présente invention, la distance séparant l'organe d'articulation du collecteur peut être comprise entre 0,01 mm et 0,5 mm. Une telle distance constitue donc une lame d'air mince et des essais ont montré que la résistance électrique entre la masse de la carte électronique **11** et l'organe d'articulation ne dépassait pas 0,6 Ω, valeur faible ou quasi-nulle qui ne s'oppose pas à l'écoulement des charges électrostatiques.

Par ailleurs, conformément à une autre forme de réalisation de l'invention, le collecteur peut être monté directement au contact de l'organe d'articulation déplaçant le mécanisme du composant mobile. Ainsi, comme l'illustre la figure 6, le dispositif **160** destiné à collecter les charges électrostatiques est directement monté sur l'organe d'articulation **12**. Un tel contact électrique garantit donc l'écoulement des charges vers la masse électrique du véhicule par l'intermédiaire de la masse **13** de la carte électronique **11**.

Le dispositif de collecte **160** peut être relié à la masse **13** par l'intermédiaire d'un fil ou d'un câble flottant, nécessairement court étant donné les dimensions de la carte électronique **11**. Néanmoins, dans le cas où l'organe d'articulation **12** est un pignon rotatif, il est préférable d'éviter d'entraîner en rotation le dispositif de collecte **160**.

Comme le montre la figure 7A, on peut alors monter un élément conducteur élastique **162** entre la partie tournante **12** et la partie fixe **161** du dispositif de collecte **160**. En l'occurrence, cet élément conducteur élastique **162** présente la forme d'une coupelle élastique, orientée de manière à ce que sa force de rappel s'oppose au poids de l'arbre et du pignon rotatif **12**, de façon à maintenir le collecteur **162** en contact avec cet organe d'articulation **12**. Ainsi, les charges électrostatiques sont évacuées vers la masse **13** au fur et à mesure qu'elles apparaissent à la surface du toit en verre, donc à travers le pignon **12** et son arbre d'entraînement. On assure ainsi l'équipotentialité de l'organe **12** avec la masse **13**.

La figure 7B illustre une structure alternative à celle de la figure 7A, pour maintenir en contact les pignon et arbre rotatifs avec le dispositif collecteur **170.** La différence entre la figure 7A et la figure 7B réside essentiellement dans la forme des organes terminaux **161** ou **171** du collecteur **170** et du pignon **12.** Ainsi, sur la figure 7B, c'est l'arbre du pignon **12** qui comprend un logement femelle recevant un ergot formé sur le collecteur **171**, tandis que dans la figure 7A, le logement femelle est ménagé dans le collecteur **161**. Dans les deux cas de figures, la coupelle **162** ou **172** est comprimée par l'extrémité de l'arbre **12**, de façon à ce que son élasticité les maintienne en contact.

La figure 8 présente une variante de cette forme de réalisation de l'invention. Le contact entre le collecteur **181-182** est ici réalisé par des contacteurs à languettes **181** conducteurs et élastiques. La force de rappel des contacteurs à languettes **181** les dirige vers l'axe du pignon **12**, maintenant ainsi un contact électrique. Les contacteurs à languettes présentent une faible résistance électrique, de l'ordre de 0,1 Ω, et ils sont soudés dans la carte électronique **11** au niveau d'une piste conductrice **182** reliée à la masse **13** de cette carte électronique **11**.

D'autres formes de réalisation de l'invention sont possibles sans pour autant sortir du cadre de cette invention. Par exemple, une variante de l'objet de l'invention consiste à déposer directement l'anneau formant la masse électrique sur le circuit imprimé composant la carte électronique **11**. Ainsi, le circuit souple en Mylar^{®} peut être déposé sur le circuit imprimé en respectant les principes de construction suivants. L'anneau de masse ne doit pas être recouvert de couche isolante, telle qu'un vernis de protection, et il doit être relié à une piste de masse électrique spécifique de manière indépendante de la masse des composants électroniques de la carte électronique **11**.

## Revendications

1. Actionneur (11-12) destiné à mouvoir un composant mobile (3) d'un véhicule, ledit composant mobile (3) étant susceptible d'accumuler des charges électrostatiques, ledit actionneur (11-12) comprenant un organe d'articulation (12) pour mouvoir ledit composant mobile (3), ainsi qu'une carte électronique de commande (11) possédant une masse (13) apte à être électriquement connectée à un potentiel nul de référence, ledit actionneur (11-12) étant ***caractérisé* en ce qu'**il comprend en outre un collecteur (140 ; 150; 160 ; 170) électriquement conducteur relié électriquement à ladite masse (13) et agencé en contact ou à faible distance et en regard dudit organe d'articulation (12) de manière à présenter une résistance électrique quasi-nulle à lécoulement desdites charges électrostatiques ne dépassant pas 0,6 Ω.

2. Actionneur (11-12) selon la revendication 1, *caractérisé* en cc que ledit collecteur (140 ; 150 ; 160 ; 170) est électriquement relié à la masse (13) de manière indépendante du circuit de masse (131) des composants électroniques constituant ladite carte de commande (11).

3. Actionneur (11-12) selon l'une des revendications précédentes, ***caractérisé* en ce qu'**il est apte à mouvoir ledit composant (3) selon une rotation et **en ce que** ledit collecteur (140) présente une forme apte à réaliser une probabilité isotrope pour le départ des charges électrostatiques de l'actionneur (11-12) vers ledit collecteur.

4. Actionneur (11-12) selon la revendication précédente, ***caractérise* en ce qu'**il ledit collecteur (140) la forme d'un anneau circulaire monté de façon coaxiale autour d'un arbre cylindrique constituant l'organe d'articulation (12).

5. Actionneur (11-12) selon l'une des revendications 1 ou 2, *caractérisé* en ce ledit collecteur (140) présente une forme constituée d'arcs circulaires apte à réaliser une probabilité anisotrope pour le départ des charges électrostatiques de l'actionneur (11-12) vers ledit collecteur tel qu'un anneau ovale monté de façon coaxiale.

6. Actionneur (11-12) selon l'une des revendications 1 ou 2, *caractérivé* en en ce que ledit collecteur (140) présente une forme constituée d'au moins une facette apte à réaliser une probabilité anisotrope pour le départ des charges électrostatiques de l'actionneur (11-12) vers ledit collecteur tel qu'un anneau de forme polygonale.

7. Actionneur (11-12) selon l'une des revendications 1 ou 2, *caractérisé* en en ce que ledit collecteur (140) présente une forme constituée de plots métalliques apte à réaliser une probabilité anisotrope pour le départ des charges électrostatiques de l'actionneur (11-12) vers ledit collecteur.

8. Actionneur (11-12) selon l'une des revendications 1 ou 2, *caractérisé* en en ce que ledit collecteur (140) présente une forme constituée de trous présentant une surface métallique apte à réaliser une probabilité anisotrope pour le départ des charges électrostatiques de l'actionneur (11-12) vers ledit collecteur.

9. Actionneur (11-12) selon la revendication 4, ***caractérisé* en ce que** ledit anneau (142) est constitué d'une piste annulaire conductrice déposée sur un substrat souple (143) en matériau polymère, de préférence en un polyéthylène téréphtalate (P.E.T.P.) métallisé, ledit substrat souple (143) comportant au moins une branche (141) dont une extrémité est connectée à ladite masse (13), tandis que l'autre extrémité supporte ledit anneau en porte-à-faux entre le composant mobile et la carte électronique.

10. Actionneur (11-12) selon la revendication 2, ***caractérisé* en ce que** la carte électronique (11) comporte un trou traversant apte à loger ledit arbre cylindrique et **en ce que** ledit anneau est constitué d'une piste annulaire (145) conductrice déposée sur la carte électronique (11) et prolongée par une branche conductrice (146) connectée à ladite masse (13) de manière indépendante du circuit de masse des composants électroniques constituant ladite carte de commande (11).

11. Actionneur (11-12) selon l'une des revendications 1 à 2, ***caractérisé* en ce qu'**il est apte à mouvoir ledit composant selon une translation rectiligne et **en ce que** ledit collecteur est une plaque présentant un côté rectiligne et parallèle à une barre constituant l'organe d'articulation, ladite plaque étant relié électriquement à ladite masse par l'intermédiaire d'une piste conductrice déposée sur ladite carte électronique.

12. Actionneur (11-12) selon l'une des revendications 1 à 2, ***caractérisé* en ce qu'**il est apte à mouvoir ledit composant selon un mouvement curviligne et **en ce que** ledit collecteur (144) présente une forme courbe correspondante et parallèle à l'organe d'articulation (12), ledit collecteur (144) étant relié électriquement à ladite masse par l'intermédiaire d'une piste conductrice déposée sur ladite carte électronique (11).

13. Actionneur (11-12) selon l'une des revendications précédentes, ***caractérisé* en ce que** ladite distance est comprise entre 0,01 mm et 0,5 mm.

14. Actionneur (11-12) selon l'une des revendications 1 à 2, ***caractérisé* en ce que** le collecteur (162 ; 172) comporte un élément conducteur élastique dont la force de rappel est apte à le maintenir en contact avec l'organe d'articulation (12).

15. Actionneur (11-12) selon la revendication 14, ***caractérisé* en ce que** qu'il est apte à mouvoir ledit composant (3) selon une rotation et **en ce que** ledit collecteur (160 ; 170) présente la forme d'une coupelle (162 ; 172) comprimée par l'extrémité d'un arbre (12) constituant l'organe d'articulation.

16. Actionneur (11-12) selon l'une des revendications précédentes, ***caractérisé* en ce que** ledit composant mobile est un ouvrant de toit (3), une portière ou un hayon.

## Claims

1. Actuator (11-12) designed to move a movable component (3) of a vehicle, said movable component (3) being capable of accumulating electrostatic charges, said actuator (11-12) comprising an articulation member (12) in order to move said movable component (3), and an electronic control board (11) having a ground (13) capable of being electrically connected to a zero reference potential, said actuator (11-12) being **characterized in that** it also comprises an electrically conductive collector (140; 150; 160; 170) electrically connected to said ground (13) and arranged in contact with or at a short distance, from and facing said articulation member (12) so as to have a virtually zero electric resistance to the flow of said electrostatic charges not higher than 0.6 Ω.

2. Actuator (11-12) according to Claim 1, **characterized in that** said collector (140; 150; 160; 170) is electrically connected to the ground (13) independently of the ground circuit (131) of the electronic components forming said control board (11).

3. Actuator (11-12) according to either of the preceding claims, **characterized in that** it is capable of moving said component (3) in rotation and **in that** said collector (140) has a shape capable of achieving an isotropic probability for the departure of the electrostatic charges from the actuator (11-12) to said collector.

4. Actuator (11-12) according to the preceding claim, **characterized in that** said collector (140) has the shape of a circular ring mounted coaxially about a cylindrical shaft forming the articulation member (12).

5. Actuator (11-12) according to either of Claims 1 and 2, **characterized in that** said collector (140) has a shape consisting of circular arcs capable of achieving an anisotropic probability for the departure of the electrostatic charges from the actuator (11-12) to said collector such as an oval ring mounted coaxially.

6. Actuator (11-12) according to either of Claims 1 or 2, **characterized in that** said collector (140) has a shape consisting of at least one facet capable of achieving an anisotropic probability for the departure of the electrostatic charges from the actuator (11-12) to said collector such as a polygonal-shaped ring.

7. Actuator (11-12) according to either of Claims 1 or 2, **characterized in that** said collector (140) has a shape consisting of metal pads capable of achieving an anisotropic probability for the departure of the electrostatic charges from the actuator (11-12) to said collector.

8. Actuator (11-12) according to either of Claims 1 or 2, **characterized in that** said collector (140) has a shape consisting of holes having a metal surface capable of achieving an anisotropic probability for the departure of the electrostatic charges from the actuator (11-12) to said collector.

9. Actuator (11-12) according to Claim 4, **characterized in that** said ring (142) consists of an annular conductive track deposited on a flexible substrate (143) made of polymer material, preferably made of metalized polyethylene terephthalate (PETP), said flexible substrate (143) comprising at least one branch (141) one end of which is connected to said ground (13), while the other end supports said ring overhanging between the movable component and the electronic board.

10. Actuator (11-12) according to Claim 2, **characterized in that** the electronic board (11) comprises a through-hole capable of housing said cylindrical shaft and **in that** said ring consists of an annular conductive track (145) deposited on the electronic board (11) and extended by a conductive branch (146) connected to said ground (13) independently of the ground circuit of the electronic components forming said control board (11).

11. Actuator (11-12) according to either of Claims 1 and 2, **characterized in that** it is capable of moving said component in a rectilinear translation movement and **in that** said collector is a plate having a side that is rectilinear and parallel to a bar forming the articulation member, said plate being electrically connected to said ground by means of a conductive track deposited on said electronic board.

12. Actuator (11-12) according to either of Claims 1 and 2, **characterized in that** it is capable of moving said component in a curvilinear movement and **in that** said collector (144) has a corresponding curved shape parallel to the articulation member (12), said collector (144) being electrically connected to said ground by means of a conductive track deposited on said electronic board (11).

13. Actuator (11-12) according to one of the preceding claims, **characterized in that** said distance is between 0.01 mm and 0.05 mm.

14. Actuator (11-12) according to either of Claims 1 and 2, **characterized in that** the collector (162; 172) comprises an elastic conductive element the return force of which is capable of keeping it in contact with the articulation member (12).

15. Actuator (11-12) according to Claim 14, **characterized in that** it is capable of moving said component (3) in rotation and **in that** said collector (160; 170) has the shape of a dish (162; 172) compressed by the end of a shaft (12) forming the articulation member.

16. Actuator (11-12) according to one of the preceding claims, **characterized in that** said movable component is a roof panel (3), a door or a tailgate.

## Patentansprüche

1. Aktor (11-12), der dazu bestimmt ist, eine bewegliche Komponente (3) eines Fahrzeugs zu bewegen, wobei die bewegliche Komponente (3) elektrostatische Ladungen akkumulieren kann, wobei der Aktor (11-12) ein Gelenkorgan (12), um die bewegliche Komponente (3) zu bewegen, sowie eine elektronische Steuerkarte (11), die eine Masse (13) besitzt, die mit einem Referenzpotential von null elektrisch verbunden werden kann, umfasst, wobei der Aktor (11-12) **dadurch gekennzeichnet ist, dass** er außerdem einen Kollektor (140; 150; 160; 170) umfasst, der elektrisch leitend ist und mit der Masse (13) elektrisch verbunden ist und in einem Kontakt mit oder in einem geringen Abstand und gegenüber dem Gelenkorgan (12) angeordnet ist, derart, dass er beim Abfließen der elektrostatischen Ladungen einen elektrischen Widerstand von nahezu null aufweist nicht über 0,6 Q.

2. Aktor (11-12) nach Anspruch 1, **dadurch gekennzeichnet, dass** der Kollektor (140; 150; 160; 170) mit der Masse (13) unabhängig von der Masseschaltung (131) der elektronischen Komponenten, die die Steuerkarte (11) bilden, elektrisch verbunden ist.

3. Aktor (11-12) nach einem der vorhergehenden Ansprüche, **dadurch gekennzeichnet, dass** er dazu ausgelegt ist, die Komponente (3) rotatorisch zu bewegen, und dass der Kollektor (140) eine Form aufweist, die eine isotrope Wahrscheinlichkeit für die Abwanderung der elektrostatischen Ladungen von dem Aktor (11-12) zu dem Kollektor verwirklicht.

4. Aktor (11-12) nach dem vorhergehenden Anspruch, **dadurch gekennzeichnet, dass** der Kollektor (140) die Form eines Kreisrings hat, der koaxial um eine zylindrische Welle montiert ist, die das Gelenkelement (12) bildet.

5. Aktor (11-12) nach einem der Ansprüche 1 oder 2, **dadurch gekennzeichnet, dass** der Kollektor (140) eine Form aufweist, die aus Kreisbögen gebildet ist, die eine anisotrope Wahrscheinlichkeit für die Abwanderung elektrostatischer Ladungen von dem Aktor (11-12) zu dem Kollektor verwirklichen, etwa wie ein ovaler Ring, der koaxial montiert ist.

6. Aktor (11-12) nach einem der Ansprüche 1 oder 2, **dadurch gekennzeichnet, dass** der Kollektor (140) eine Form aufweist, die aus wenigstens einer Facette gebildet ist, die eine anisotrope Wahrscheinlichkeit für die Abwanderung der elektrostatischen Ladungen von dem Aktor (11-12) zu dem Kollektor verwirklicht, etwa wie ein polygonförmiger Ring.

7. Aktor (11-12) nach einem der Ansprüche 1 oder 2, **dadurch gekennzeichnet, dass** der Kollektor (140) eine Form aufweist, die aus metallischen Höckern gebildet ist, die eine anisotrope Wahrscheinlichkeit für die Abwanderung der elektrostatischen Ladungen von dem Aktor (11-12) zu dem Kollektor verwirklichen.

8. Aktor (11-12) nach einem der Ansprüche 1 oder 2, **dadurch gekennzeichnet, dass** der Kollektor (140) eine Form aufweist, die aus Löchern gebildet ist, die eine metallische Oberfläche aufweisen, die eine anisotrope Wahrscheinlichkeit für die Abwanderung der elektrostatischen Ladungen von dem Aktor (11-12) zu dem Kollektor verwirklicht.

9. Aktor (11-12) nach Anspruch 4, **dadurch gekennzeichnet, dass** der Ring (142) aus einer leitenden ringförmigen Bahn gebildet ist, die auf einem nachgiebigen Substrat (143) aus Polymermaterial, vorzugsweise aus metallisiertem PolyethylenTerephthalat (PETP) abgelagert ist, wobei das nachgiebige Substrat (143) wenigstens einen Zweig (141) aufweist, wovon ein Ende mit der Masse (13) verbunden ist, während das andere Ende den Ring freitragend zwischen der beweglichen Komponente und der elektronischen Karte unterstützt.

10. Aktor (11-12) nach Anspruch 2, **dadurch gekennzeichnet, dass** die elektronische Karte (11) ein Durphgangsloch aufweist, das die zylindrische Welle aufnehmen kann, und dass der Ring aus einer leitenden ringförmigen Bahn (145) gebildet ist, die auf der elektronischen Karte (11) abgelagert ist und durch einen leitenden Zweig (146) verlängert ist, der mit der Masse (13) unabhängig von der Masseschaltung der elektronischen Komponenten, die die Steuerkarte (11) bilden, verbunden ist.

11. Aktor (11-12) nach einem der Ansprüche 1 bis 2, **dadurch gekennzeichnet, dass** er die Komponente längs einer geradlinigen Translation bewegen kann und dass der Kollektor eine Platte ist, die eine geradlinige Seite aufweist, die zu einem das Gelenkorgan bildenden Stab parallel ist, wobei die Platte mit der Masse über eine auf der elektronischen Karte abgelagerte leitende Bahn elektrisch verbunden ist.

12. Aktor (11-12) nach einem der Ansprüche 1 bis 2, **dadurch gekennzeichnet, dass** er die Komponente längs einer gekrümmten Bewegung bewegen kann und dass der Kollektor (144) eine entsprechende gekrümmte Form aufweist, die zu dem Gelenkorgan (12) parallel ist, wobei der Kollektor (144) mit der Masse über eine leitende Bahn, die auf der elektronischen Karte (11) abgelagert ist, elektrisch verbunden ist.

13. Aktor (11-12) nach einem der vorhergehenden Ansprüche, **dadurch gekennzeichnet, dass** der Abstand im Bereich von 0,01 mm bis 0,05 mm ist.

14. Aktor (11-12) nach einem der Ansprüche 1 bis 2, **dadurch gekennzeichnet, dass** der Kollektor (162; 172) ein elastisches Leiterelement aufweist, durch dessen Rückstellkraft er mit dem Gelenkorgan (12) in Kontakt gehalten werden kann.

15. Aktor (11-12) nach Anspruch 14, **dadurch gekennzeichnet, dass** er die Komponente (3) rotatorisch bewegen kann und dass der Kollektor (160; 170) die Form einer Schale (162; 172) aufweist, die durch das Ende einer das Gelenkorgan bildenden Welle (12) komprimiert ist.

16. Aktor (11-12) nach einem der vorhergehenden Ansprüche, **dadurch gekennzeichnet, dass** die bewegliche Komponente ein Schiebedach (3), eine Tür oder eine Heckklappe ist.
